# EUROPEAN PATENT APPLICATION

(11) **EP 4 089 474 A1**
(43) Date of publication of application: **16.11.2022**
(21) Application number: 21315080.8
(22) Date of filing: 10.05.2021
(51) Int. Cl.: G02C 7/02, B29D 11/00, G02C 7/06

(54) **SEMI-FINISHED OPTICAL ELEMENT FOR MANUFACTURING AN OPHTALMIC ARTICLE, OPHTALMIC ARTICLE AND RELATED MANUFACTURING METHOD**

(71) Applicant: ESSILOR INTERNATIONAL, 94220 Charenton-Le-Pont (FR)
(72) Inventor: Colas, Pauline, 94410 SAINT MAURICE (FR); Feuillade, Mathieu, 94130 NOGENT SUR MARNE (FR); Netter, Estelle, 75012 PARIS (FR)
(74) Representative: Croonenbroek, Thomas Jakob

(57) **Abstract**

The invention relates to a semi-finished optical element (SF) for manufacturing an ophthalmic article (1) for vision-correction comprising:
- at least one blank (3) having a front diopter (3F) and a rear diopter (3R), the blank (3) being configured to present a first optical power distribution,
- one of the diopters (3F, 3R) being unfinished and the other being finished,
- a optical component layer (5) comprising a periodic or pseudo - periodic arrangement of optical wave-front shaping elements (5E) that are smaller than 10µm and configured to control incoming light at least in a part of the visible spectrum and providing a second optical power distribution, wherein the optical component layer (5) is transparent in transmission in the visible wavelength and is disposed on the finished diopter (3F, 3R) of the blank (3) for cooperating together to achieve a third optical power distribution.

## Description

### FIELD OF INVENTION

The present invention relates to a semi-finished optical element for manufacturing an ophthalmic article, an ophthalmic article and related manufacturing method.

### BACKGROUND AND PRIOR ART

The term "ophthalmic article" is specifically understood to mean a lens, corrective or otherwise, that can be used as spectacle glass, for spectacles for example, particularly sunglasses, goggles, visors or the like.

Ophthalmic articles are medical devices to correct the vision of a user or wearer and/ or to protect his eyes.

However, the pathologies to be treated and the needs for specific corrections or protections are as various as the number of individual wearers. This is an important challenge for manufacturing for example lenses at an acceptable cost.

For ophthalmic lens wearer for example, it is beneficial to have thin lenses, because it limits the glasses weight and provides an improved aesthetics. In order to manufacture thin lenses, it is known to use material with high refractive index, but in the current lens manufacturing industry which uses for high volume production plastic material as blank, it is very challenging to use material with refractive indexes greater than 1.78.

Another problem is the difficulty to provide to a wearer a lens having sufficient high optical power for any base curve. For instance, for sunglasses having large frame curvature, it is difficult or not possible to provide high negative optical correction power.

The present invention aims to overcome at least partially some of the above cited drawbacks.

### SUMMARY OF THE INVENTION

With this aim, the invention proposes a semi-finished optical element for manufacturing an ophthalmic article for vision-correction comprising:
- at least one blank having a front diopter and a rear diopter, the blank being configured to present a first optical power distribution,
- one of the diopters being unfinished and the other being finished,
- a optical component layer comprising a periodic or pseudo - periodic arrangement of optical wave-front shaping elements that are smaller than 10µm and configured to control incoming light at least in a part of the visible spectrum and providing a second optical power distribution,
wherein the optical component layer is transparent in transmission in the visible wavelength and is disposed on the finished diopter of the blank for cooperating together to achieve a third optical power distribution.

The general concept behind is to improve the application range of semi-finished optical elements, allowing to better adapt semi-finished optical elements to a wide ranges of prescriptions for vision-correction. One specific achievement is to get thin ophthalmic articles even when strong vision correction is necessary.

The adhesion of an optical component layer having an arrangement of periodic optical wave-front shaping elements which are smaller than 10µm and configured to control incoming light at least in a part of the visible spectrum, thus conferring a second optical power distribution, allows to adapt the first optical power distribution of the blank to achieve a third optical power distribution.

The number of different optical components layers having an arrangement of periodic optical wave-front shaping elements configured to control incoming light at least in a part of the visible spectrum that might be adapted to blanks, can also be reduced and separate manufacturing allows achieving reasonable manufacturing costs.

In addition, use of such optical component layers having a periodic or pseudo-periodic arrangement of optical wave-front shaping elements allows, depending on the needs, positive and negative optical power correction independent from the curvature / base curve of the ophthalmic article to be fitted into a frame for example.

The semi-finished optical element may present one or several of the following aspects taken alone or in combination.

The second optical power distribution provided by the optical component layer may mainly contribute to achieve the third optical power distribution.

The optical component layer is for example adhered to the front diopter and/or the rear diopter.

The arrangement of periodic or pseudo-periodic optical wave-front shaping elements comprises in particular a pattern and a periodicity / pseudo periodicity according to at least one dimension, the periodicity having a dimension less than at least one wavelength in the visible range.

The optical wave-front shaping elements may comprise optical scatterers, for example dielectric nanoresonators with a refractive index higher than 1.8.

Possible material for the dielectric nanoresonators may be SiO2, MgF, Ti2O3, TiO2, Ti3O5, or GaN.

The optical scatterers comprise for example a rod-, cylinder-, hemispheric-, cubic-shape.

The arrangement of periodic optical wave-front shaping elements comprises in particular a pattern and a periodicity according to at least one dimension, the periodicity having a dimension greater than at least one wavelength in the visible range.

The optical component layer may comprise at least a first zone corresponding to a first vision zone, in particular a far vision zone and a second zone corresponding to a second vision zone, in particular a near vision zone.

The invention also relates to an ophthalmic article having a given prescription comprising a semi-finished optical element as described above, where the unfinished diopter of the blank is finished, in particular surfaced to achieve the given prescription.

The invention furthermore relates to a set of blanks and a set of optical components layers for manufacturing ophthalmic articles of given prescriptions, wherein:
- the blanks have a front diopter and a rear diopter and at least one diopter, in particular front diopter is curved, at least two blanks having different base curves, one of the diopters being unfinished and the other being finished,
- the optical components layers have an arrangement of periodic or pseudo-periodic optical wave front shaping elements that are smaller than 10µm and configured to control incoming light at least in a part of the visible spectrum, at least two optical components layers having a different optical power,
wherein the optical component layers are transparent in transmission in the visible wavelength and are configured to be disposed on one associated finished diopter of the blank for cooperating together to achieve, after surfacing of the unfinished diopter of the blank, ophthalmic articles of given prescriptions.

The invention further relates to a method for manufacturing an ophthalmic article with a prescribed vision correction, comprising the steps of:
- providing a prescription with a prescribed vision correction,
- providing a semi-finished optical element comprising
   at least one blank having a front diopter and a rear diopter configured to present a first optical power distribution, one of the diopters being unfinished and the other finished, and

   an optical component layer having a periodic or pseudo-periodic arrangement of optical wave-front shaping elements that are smaller than 10µm and configured to control incoming light at least in a part of the visible spectrum and providing a second optical power distribution,
   wherein the optical component layer is transparent in transmission in the visible wavelength and is disposed on the finished diopter of the blank for cooperating together to achieve a third optical power distribution, and
- surfacing the unfinished diopter of the blank of the selected semi-finished optical element to get the ophthalmic article with the prescribed vision correction.

The method may comprise one or several of the following aspects:
The method may further comprise a step of providing a base frame curvature of an eyewear,
   wherein the step of providing a set of semi-finished optical elements comprises providing semi-finished optical elements such that the front diopter of the blank of each semi- finished element of the set has a curvature fitting to the base frame curvature, and wherein the unfinished diopter of the blank which is surfaced to get the ophthalmic article with the prescribed vision correction is the rear diopter of the blank.

The second optical power distribution of the optical component layer is in particular optimized with regard to the first optical power distribution of the blank to reduce thickness of the ophthalmic article.

The prescribed vision correction comprises for example a far vision correction to be associated with the far vision zone and an addition value to be associated to the near vision zone and to the intermediate vision zone, and
wherein the optical component layer has for example a second optical power distribution contributing mainly to the prescribed vision, correction in the near vision zone and in the intermediate vision zone.

### BRIEF DESCRIPTION OF THE DRAWINGS

Other advantages and features will become apparent upon reading the description of the following figures, among which:
- figure 1 shows schematically a schematic cross section view of an assembly step of an example of a semi-finished optical element for manufacturing an ophthalmic article,
- figure 2 is a perspective schematic view of an optical components layer with sub-micrometric optical wave-front shaping elements according to one embodiment,
- figure 3 is a schematic view of an optical components layer with sub-micrometric optical wave-front shaping elements according to another embodiment,
- figure 4A shows a subsequent assembly step following the step shown in figure 1,
- figure 4B shows a manufactured ophthalmic article,
- figures 5 and 6 show views corresponding to those of figures 1 and 4 of a further embodiment,
- figures 7 shows an example of blanks and optical component layers for forming a set of semi-finished optical articles,
- figure 8 shows a flowchart of a method for manufacturing an ophthalmic article with a prescribed vision correction, and
- figure 9 shows an example of an ophthalmic article with several vison zones.

### DETAILED DESCRIPTION

On all the figures, the same elements bear the same reference numbers.

The following embodiments are only examples. Although the description refers to one or several embodiments, the invention is not limited to these embodiments. In addition, a feature described in relationship with one embodiment may also concern another embodiment even if this is not mentioned expressively. Simple features of different embodiments may also be combined to provide further realizations.

In the present description, by "front" or "rear" face of a layer, reference is made to the propagation of the rays of light towards the eye through the ophthalmic lens when an ophthalmic device bearing the ophthalmic lens is worn on a wearer's face. Thus a "front" face is always that which is farest away to the eye of the user and therefor closest to the field of view and a "rear" face is always that which is closest to the eye of the user.

By "upstream" or' "downstream" of two elements or layers, one refers to the propagation of the rays of light towards the eye in the same system as presented above. Thus, a first element is disposed upstream of a second element when the light passes through its path towards the eye of the user first through the first element and then through the second element. Conversely, a first element is disposed "downstream" of a second element when the light passes through its path towards the eye of the user first through the second element and then through the first element.

The terms "crystal" or "crystal glass" are understood to mean a glass/optical material of the class 0 according to the standardized international definition of glasses into five categories of light transmission. It is a glass having in the visible spectrum a light transmission range comprised between 80% and 100%.

The term "semi-finished (SF) optical element" is specifically understood as an optical element having already some properties of the finished ophthalmic article. It can be manufactured as standard element to be customized and treated with specific further manufacturing steps to obtain an ophthalmic article having the properties and features as requested by the user or wearer of the ophthalmic article.

Furthermore a semi-finished optical element does not provide the final power, also called prescribed optical power, of the ophthalmic article or lens that is manufactured from the semi-finished optical element.

In particular a semi-finished optical element is generally not fully surfaced. Surfacing is a sequence of operations comprising machining at least one of the front surface or back surface of the semi-finished optical element to provide its final geometry and optical power distribution. The final correction is obtained by a later surfacing of the surface which is not yet surfaced, in general the rear face. One or several coatings may then be provided on either surface to obtain the final optical and mechanical performances of the ophthalmic article which are in line with prescription.

A finished optical element or ophthalmic article, generally referred to as an ophthalmic lens, is fully surfaced to achieve the prescribed vision correction and possesses the required optical coatings. It may be not trimmed, which means that its peripheral shape has not been adjusted to the shape of a frame in which it will then be inserted or mounted in.

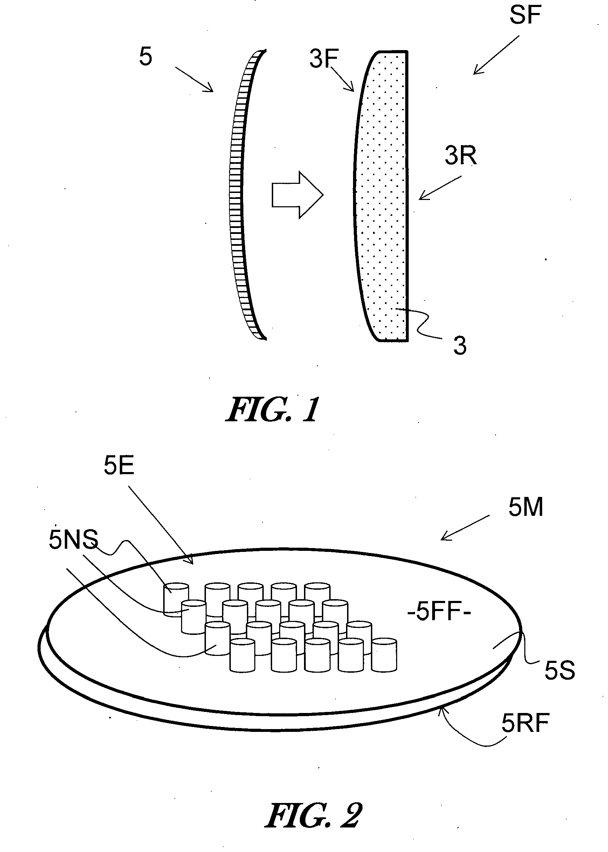

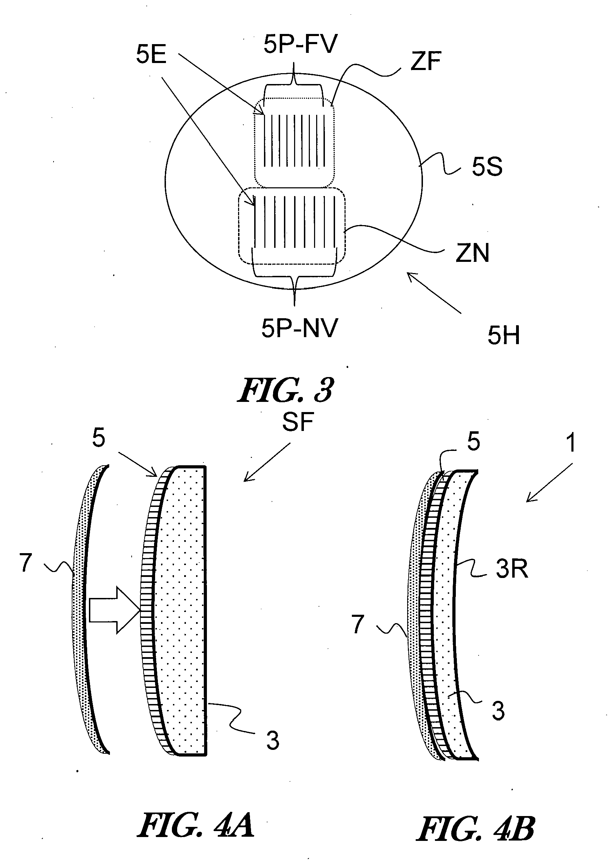

Figure 1 shows schematically a schematic cross section view of an assembly step of an example of a semi-finished optical element SF for manufacturing an ophthalmic article 1 (shown in figure 4B).

In particular figure 1 shows a blank 3 having a front diopter 3F and a rear diopter 3R.

The blank 3 is for example made of a transparent plastic material, thermoset or thermoplastic plastic material, in particular made of polyamide (PA), like nylon or a polycarbonate. Blank 3 may be crystal clear, tinted or partially tinted. In particular, the transparent plastic material forming the blank 3 may be bulk-tinted.

"Transparent" in this context means that at least part of impinging light on the front diopter 3F is transmitted to the rear diopter 3R and can reach an eye of a user or wearer of the ophthalmic article 1. Thus transparent is to be understood in wide common sense as "not opaque".

The rear diopter 3R is to be oriented toward the eye of a user and the front diopter 3F is to be oriented opposite to the user's eye and toward the field of vision of the user.

The blank 3 is configured to present a first optical power distribution. Thus blank 3 may have partial functions of a lens for example. In particular the blank presents a base curve adapted to a frame to which the finished lens will be fitted.

In particular, the first optical power distribution of the blank 3 may be equal to zero, meaning that blank 3 presents no optical power or show an unifocal, bifocal, multifocal optical power distribution. The first optical power distribution of the blank 3 may also present a progressive optical power distribution

Concerning the blank 3, one of the diopter (front diopter 3F or rear diopter 3R) is unfinished and the other (rear diopter 3R or front diopter 3F) is finished. In general, the front diopter 3F of blank 3 is finished and the rear diopter 3R of blank 3 is unfinished

In this context, "finished" means that the diopter has already the final shape of the ophthalmic article 1 and presents for example treatments conferring additional functions, either alone or in combination among the following non-exhaustive list: shockproof, anti-scratch, anti-abrasion, anti-reflective, anti-fouling, anti-fogging, antistatic which are not considered as additional layers. These additional functions have for example been carried out on the blank 3 according to conventional methods (soaking, vacuum deposition, spin coating, spray coating, etc.).

In this context, "unfinished" means, that the diopter shall undergo further treatments in order to adapt the blank 3 to the specific, prescription request of the wearer. In particular an unfinished diopter shall be surfaced to obtain the final, or prescribed optical power of the ophthalmic article 1.

Figure 1 shows in addition an optical component layer 5 which has a periodic/ pseudo-periodic arrangement of optical wave-front shaping elements 5E (see for example figures 2 or 3) which are smaller than 10µm and configured to control incoming light at least in a part of the visible spectrum and providing a second optical power distribution.

It should be pointed out that the arrangement of optical wave-front shaping elements 5E shall be periodic/pseudo-periodic in at least one zone of the optical component layer 5. It is not necessary that the periodicity extends over the whole optical component layer 5 even if this might be the case. The periodicity may extend only in one direction.

Furthermore, the optical component layer 5 may present several periodic/ pseudo-periodic arrangements of optical wave-front shaping elements 5E, each of them having its specific periodicity. In the latter case with different zones on the optical component layer 5 having each its particular periodicity, transitions zones may be foreseen where the periodicity of one zone shifts to the periodicity of the other zone.

The optical component layer 5 is adapted to fit to the base curve of the blank 3.

The blank 3 and optical component layer 5 are for example manufactured separately.

The optical component layer 5 can for example be a meta-surface layer 5M (for example figure 2) or a holographic layer 5H (for example figure 3). The optical component layer 5 shapes or modulates the wave-front of the incident / impinging light by acting locally on the phase of the light rays which then cooperate by interference and realize for example a focusing function.

Figure 2 shows in a schematic perspective view a schematic example of a meta-surface 5M forming an optical component layer 5 with an arrangement sub-micrometric of optical wave-front shaping elements 5E.

A meta-surface 5M comprises a support layer 5S and at least a set of nanostructures 5NS disposed on the support layer 5S.

The support layer 5S has a front face 5FF on which the nanostructures 5NS are built and a rear face 5RF. With regard to example of figures 1, 2, 3, 4A and 4B, the support layer 5S and in particular its rear face 5RF has a curvature (base curve) that fits with the curvature (base curve) of the front diopter 3F.

Functionally, the set of nanostructures 5NS is configured to impart an amplitude and/or a phase change to incident light so as to scatter the incident light and/or diffuse the incident light and/or absorb the incident light. For this, the nanostructures 5NS of a set are configured to function as resonators and/or scatterers.

Structurally, nanostructures 5NS are in the form of nanoscale features that are formed on, built on or are integrated in front face 5FF of support layer 5S. It should be noted that the meta-surface layer 5M has its own support layer 5S which is different form the blank 3.

In the present example, air is between the nanostructures 5NS. In further embodiments, the nanostructures 5NS may be encapsulated by a medium, like a varnish, having a refractive index different from the refractive index building the nanostructures 5NS.

As used herein, the term "nanoscale" when used in connection with a feature means that the dimensions of the features are less than 1 micron. In general, the dimensions of the nanostructures will scale with the shortest wavelength of interest, in particular about 420nm in the blue range of the visible spectrum.

In the context of the present disclosure, when visible light is considered, the largest linear dimension of the nanostructure in the plane of the blank surface (length or width) is less than or equal to 500 nanometers (nm), such as less than or equal to 250 nm, or even less than or equal to 100 nm.

Without limitation, in some embodiments the nanostructures described herein are nanoscale structures formed on a surface of support, and have a longest linear dimension of about 100 to about 200 nanometers.

In some instances, the largest linear feature size of nanostructures is their height relative to the surface of blank which bears the nanostructure in question. In such instances, the height of the nanostructures may be less than or equal to 1000 nm, such as less than or equal to 600 nm.

The distance (also named "period" or "fundamental period") between adjacent nanostructures in each set may vary widely, and may be selected during the design of optical system to facilitate the attainment of a desired phase change at a particular portion or a particular zone of the lens.

The arrangement of sub-micrometric optical wave-front shaping elements 5 comprises for example a pattern and a periodicity according to at least one dimension, the periodicity having a size or dimension less than at least one wavelength in the visible range.

Without limitation, in some embodiments, the period between adjacent nanostructures ranges from about 50 to about 1000 nanometers (nm), such as from about 100 nm to about 500 nm, about 100 nm to about 300 nm, or even about 100 nm to about 200 nm. In some embodiments, the period between adjacent nanostructures in a set is greater than or equal to 100 nm to facilitate production of a set via lithographic or other techniques.

In instances where nanostructures are included in a Bravais lattice (that is, as an example, a hexagonal Bravais lattice) formed by unit cells containing a plurality of nanostructures, the period of the nanostructures may correspond to one or more lattice parameters of the unit cell(s) used to form the lattice.

The unit cells may have any suitable geometry, and may be symmetrical or asymmetrical. Without limitation, in some embodiments all or at least a portion of the shape of the unit cells and their contents are symmetrical (for instance, square, hexagonal, triangular, etc.), so as to reduce or eliminate polarization dependent effects. A plurality of such unit cells may be used to make up one or more regions of the set. In such instances the geometry of each unit cell (for instance, length and width) and/or the nanostructures therein (for instance, nanostructure height, width, diameter and position within a unit cell) may be controlled such that the nanostructures in each respective unit cell impart an appropriate phase change to incident light, based at least in part on the position of the unit cell relative to the optical axis of meta-surface. A specific application of this embodiment consists in using a stack of several meta-surfaces in the thickness axis to achieve different optical functions. Focusing and correcting are examples of such optical function.

Although the cylindrical pillar shape is the most common shape (see figure 2), the shape of the nanostructures described herein can vary considerably. For example, the nanostructures are in the form of cylindrical pillars, ellipsoidal pillars, spheres, rectangular prisms, other scattering structures, or the like.

When the nanostructures described herein are in the form of pillars, such pillars may have one or more than one side. Examples of such pillars include cylindrical (one sided) pillars, triangular (three sided) pillars, quadrilateral (four sided pillars), pentagonal (five sided) pillars, and the like.

As noted previously the dimensions of the nanostructures described herein may vary considerably. For example in some embodiments the set described herein include nanostructures, wherein the height of such nanostructures is fixed or variable across the entirety or a portion of a meta-surface. In any case, the height of the nanostructures may be in the range of from about 50 nm to about 2000 nm, such as about 100 nm to about 600 nm, or even about 100 nm to about 200 nm. In some embodiments, the height of the nanostructures is greater than 100 nm. Of course such ranges are enumerated for the sake of example only, and the nanostructures herein may be of any suitable height.

The lateral size of the nanostructures described herein may also vary considerably. For example, in instances where the nanostructures are in the form of cylindrical nanoscale pillars, a radius may be defined for a pillar as the radius of the circle that is obtained by the intersection of the pillar with the blank plane. The radius of such pillars may range, for example, from about 25 nm to about 500 nm, such as from about 50 nm to about 250 nm, or even about 50 to about 100 nm. Without limitation, in some embodiments the nanostructures are in the form of cylindrical pillars having a diameter of greater than or equal to about 50 nm. Similarly in instances where the nanostructures include or are in the form of multisided pillars or other geometric shapes, such structures may have a lateral length (i.e., a longest linear dimension as measured between opposing sides of a nanostructure) ranging from about 50 nm to about 2000 nm, such as about 100 nm to about 600 nm, or even about 100 to about 200 nm. Of course such ranges are enumerated for the sake of example only.

A wide variety of materials may be used to form the nanostructures. In some instances, it may be desirable to select the materials for forming the nanostructures based on the wavelength(s) of light that will be incident on the meta-surface layer in a target application.

When a target application involves using the meta-surface layer to impart a phase change to visible light, for example, it may be desirable to form the nanostructures from one or more materials that interact with visible light.

Non-limiting examples of such materials include high refractive index materials.

The nanostructures are generally made in material exhibiting relatively high optical index. For instance, the TiO2 is an appropriate material, notably thanks to its transparency for visible light and its high optical index of about 2.5.

For applications where a slight absorption is tolerated, other materials are possible. FeO2 and BiFeO3 are specific interesting examples.

The nanostructures may be in a dielectric material which can be selected from oxides, nitrides, sulphides and pure elements exhibiting sufficient dielectric properties for enabling to impart amplitude and/or a phase change to incident light.

Aluminium oxide (Al2O3), silicon oxide (SiO2), hafnium oxide, (HfO2), zinc oxide (ZnO), magnesium oxide (MgO) and titanium oxide (TiO2) are specific examples of oxides. Nb2O5 and Ta2O5 may also be considered.

Silicon nitride (Si3N4), boron nitride (BN), aluminium nitride (AIN) and tungsten nitride (WN) are specific examples of nitrides.

ZnS and CdS are examples of sulphides.

Other examples include carbides such as SiC and diamond.

Alternatively or additionally, the nanostructures may be formed from or include one or more high-index polymers (n>1.6), such as but not limited to acrylics. Polymers with even higher index may also be used, and may be formed, for example, by highly loading a polymer matrix with nanoparticles that have a refractive index of greater than or equal to 1.8, or even greater than or equal to 2.

The nanostructures described herein are not limited to a single material, and may be formed from more than one material. For example, the nanostructures may include two or more of the above noted materials, wherein alternating layers (or other configurations) of such materials are used to "build up" a nanostructure on the surface of a blank.

The refractive index of the materials used to form the nanostructures may impact their performance for a given application. It may therefore be desirable to select materials for forming the nanostructures based on their refractive index.

In some embodiments the nanostructures may be formed from or include dielectric or other materials having a refractive index that is greater than or equal to about 1.5, 2.0, 2.3, 2.5, 2.7, or more. Without limitation, in some embodiments nanostructures are formed from or include dielectric materials having a refractive index greater than or equal to 2. Non-limiting examples of such materials include those mentioned above.

The microstructure of the materials used as nanostructures may also have an impact on their optical performance. For example, in some instances the microstructure of the materials used to form nanostructures may give rise to artefacts.

Alternatively or additionally, the microstructure of the materials of nanostructures can cause anisotropic propagation of light through meta-surface. In this context as can be found in the literature, microstructure refers to the positioning of the materials of nanostructures at the atomic level. It may therefore be desirable to select materials for use as nanostructures based on their microstructure. For example, it may be desirable to use amorphous or cubic materials (for instance, amorphous TiO2, cubic ZnO), so as to control anisotropic propagation effects in meta-surface. Of course, it is not necessary to use amorphous or cubic materials to form nanostructures, and materials with other microstructures may also be used. It is noted that nanostructures consistent with the present disclosure need not have a uniform (for instance, single) nanostructure and that such structures may include a composite, random, or other complicated microstructure, as desired.

In a specific embodiment, the periodicity/ pseudo-periodicity is according to two dimensions of the optical component layer and is configured to control incoming light at least in one wavelength range, in particular in three ranges of the visible spectrum, a range, in particular between 10nm and 20nm width, belonging to a particular colour perception of the human eye, like blue, green and / or red respectively around 465nm (+/- 10nm), 550nm (+/- 10nm) and 610nm (+/- 10nm). Such an optical component layer 5 may provide colour enhancement function.

The nanostructures 5NS may be subwavelength high dielectric (high refractive index) materials exhibiting Mie resonances and can be organized in a 1D or a 2D periodic lattice. The optical response of the nanostructures 5NS is tailored by changing the geometry of each individual nanostructure 5NS forming the meta-surface 5MS.

Meta-surfaces based on resonance tuning of dielectrics can achieve phase coverage up to 2π using TE and TM modes. Examples which are incorporated by reference can be found in "Miniature optical planar camera based on a wide-angle metasurface doublet corrected for monochromatic, aberrations, Nature Communications 7 April 2016", "High efficiency double-wavelength dielectric metasurface lenses with dichroic birefringent meta-atoms, Vol. 24, No. 16 | 8 Aug 2016 | OPTICS EXPRESS 18470".

Meta-surface 5MS may also be based on Pancharatnam-Berry retardation. This type of metasurfaces exploits the geometrical dispersion phase also known as Pancharatham-Berry phase retardation, induced by the rotation of anisotropic subwavelength scatterers (rectangular for example) with the exact same geometry, equal to twice the rotation angle for cross polarizations. They are inherently polarization-dependent.

The only requirement for the optical scatterers in that case is to have large and spectrally tunable cross section to be able to collect the energy of the incident radiation with high efficiency, to give rise to a large local field enhancement to be able to transfer energy into small volumes around the optical scatterers, and to work under cross polarizers.

An example incorporated by reference is described in "A spherical aberration free lens proposed by Capasso et el., Khorasaninejad, M., Chen, W. T., Devlin, R. C., Oh, J., Alexander, Y., & Capasso, F. (2016). Planar Lenses at Visible Wavelength".

Furthermore, meta-surface 5MS may also be based on achromatic metasurfaces as proposed by F. Aieta, M. A. Kats, P. Genevet, and F. Capasso, "Multiwavelength achromatic metasurfaces by dispersive phase compensation," Science 347, 1342-1345 (2015), or broadband meta-surfaces, in particular broadband achromatic metasurfaces (see Y. Li, X. Li, M. Pu, Z. Zhao, X. Ma, Y. Wang, and X. Luo, "Achromatic flat optical components via compensation between structure and material dispersions," Sci. Rep. 6,19885 (2016).

In this context, Hugens metasurfaces as reported by "Y. F. Yu, A. Y. Zhu, R. Paniagua-Dominguez, Y. H. Fu, B. Luk'yanchuk, and A. I. Kuznetsov, "High-transmission dielectric metasurface with 2π phase control at visible wavelengths," Adv. Opt. Mater. 3, 813-820 (2015)" may also be considered as they can provide controllable phase delay retardation over the entire 2π range.

Figure 3 shows a schematic example of a holographic layer 5H as an optical component layer 5.

The holographic layer 5H comprises a support layer 5S and at least one, in the present example two holographic pattern 5P, 5P-FV and 5P-NV formed by periodic optical wave-front shaping elements 5E typically with a size between 1-10µm.

The holographic pattern 5P shall be configured in particular as a holographic lens.

According to the recording configuration, the holographic layer 5H can be imparted an optical function that is independent of the geometry of the support layer 5S.

For instance, a holographic layer 5H may have a focal distance or not, comprise one or several zones of different functions or transmitting different wavelengths, have a determined optical power, etc.

The arrangement of optical wave-front shaping elements 5E comprises a pattern 5P and a periodicity according to at least one dimension and the periodicity having a dimension greater than at least one wavelength in the visible range.

A "holographic lens" is a lens which is recorded on a support thanks to a holography process. It can operate for a given wavelength or in a range of wavelengths in order to focalize light in a given direction or at a given position. On a same support a holographic lens may be configured to exhibit spectral and/or angular selectivity, have different zones of different focal distances and different spectral or angular selectivity.

In all that follows, a holographic layer 3H refers to a holographic lens.

The recording of a holographic component on a support is performed with an optical arrangement, which comprises a light source, for instance a laser, emitting a light beam. Usually, a polarization beam splitter allows splitting the beam into two beams: one reference and one illumination beam, both beams illuminating the holographic medium on the same side or on opposite sides depending on the type of holographic component. Interferences caused by the reference beam and illumination beam on the holographic recording medium allow recording the holographic component. The configurations of the reference beam and the illumination beam allow adapting the function and configuration of the holographic component. For instance in the case of holographic mirrors, once the optical arrangement is set (e.g. geometry, sizes of the beams, etc.), features of the holographic mirror can be modified by varying one or more parameters, including the power ratio between the two beams (impacts the fringe contrast and the diffraction efficiency), the exposure time (impacts the diffraction and diffusion efficiency), and the possible use of rotatable supports on which are positioned polarization maintaining fibers through which the reference beam and illumination beam are transmitted (impacts the polarizations of the beams when exiting the fibers). The skilled person may refer to document WO 2016/156614 for more details about the recording setups used to achieve desired holographic component configuration.

As shown in figure 3, optical component layer 5 (here 5H) may present several zones ZF arid ZN with specific optical power, in particular a zone ZF corresponding to far vision and a zone ZN corresponding to near vision, and each zone ZF, ZN presents its proper arrangement of periodic optical wave-front shaping elements 5E configured to control incoming light at least in a part of the visible spectrum and providing a specific optical power distribution for each zone ZF, ZN. Specifically pattern 5P-FV provides optical power in zone ZF for far vision and 5P-NV provides optical power in zone ZN for near vision.

The zones ZF, ZN may partially overlap for seamless transition from one zone to another. Also an intermediate zone for intermediate vision may be considered.

The considerations on far vision, near vision or intermediate vision and more generally on different zones may also apply to meta-surface 5M shown in figure 2, meaning that the support layer may have a zone ZF for far vision with a specific optical power distribution for far vision and a zone ZN for near vision with a specific power distribution for near vision.

The optical component layer 5 confers a second optical power distribution which is in particular different from the first optical power distribution of the blank 3.

The periodicity/ pseudo-periodicity of the arrangement of optical wave-front shaping elements 5E may extend in at least one direction. In some cases the sub-micrometric optical wave-front shaping elements 5E may be grouped as macro-patters or macro - pixel which may be periodic.

The optical component layer 5 is transparent in transmission in the visible wavelength and is disposed on one diopter (front diopter 3F or rear diopter 3R, in general on the front diopter 3F) of the blank 3 for cooperating together to achieve a third optical power distribution. Disposing the optical component layer 5 on a diopter means that the optical component layer is for example adhered, for example by gluing or by thermal fusion to the relevant front or rear diopter 3F / 3 R of the blank 3.

In order to achieve quite very thin ophthalmic articles, the optical component layer 5 confers the main optical lens power of total lens power. In other words, the blank 3 may present no optical power or an optical power as low as possible allowing achieving through the cooperation of the first and second optical power distribution the third optical power distribution. The requested prescription optical power distribution or target optical power distribution is obtained by final surfacing of the unfinished diopter (3F or 3R) of the blank 3 opposite to the diopter (3R or 3F) on which the optical component layer 5 is disposed.

As optical component layer 5 is quite thin, for example less than 1mm and the blank 3 may be equal or less than 10mm, even equal to about 4mm in case the blank 3 does not present an optical power and thus the ophthalmic article to be manufactured may be thin and light conferring ease to a wearer.

Turning now to figure 4A showing schematically a coat layer 7 which may be in particular a varnish that may be deposited onto the optical component layer 5, in particular to protect the latter. The coat layer 7 may have a refractive index in a range of 1.4 - 1.42 for example and may fill the air gap between the optical wave-front shaping elements 5E and encapsulate the latter.
The presence of a coat layer 7 like a varnish on the top of the optical elements layer 5 has to be taken into account in the design of the optical components layer 5.
In case of a metasurface 5MS, it may impact the size of the nanostructures 5NS and the spacing between them. Regarding dimensions, the difference of refractive index should be high for maintaining subwavelength height of the resonators (λ/(n-1)). As for the spacing, Lalanne and Chavel gave general considerations in [Lalanne et Chavel, Metalenses at visible wavelengths: past, present, perspectives, 2016]. They describe the narrow working window existing for metasurfaces to properly select the spacing between two nanoelements. The spacing should be large enough to decouple the evanescent tails of the nanoelements modes (nanoelements are independent from one another) and enter in to the manufacturing constraints but be small enough to avoid multimodes propagations inside the metasurfaces.
Possible coat layers comprise for example fluoropolymers or sol-gel coatings.

Figure 4A shows therefore a semi-finished optical element SF for manufacturing an ophthalmic article 1, only the rear diopter 3R may need a further treatment, for example of surfacing and deposition of a hard coat layer for protection on the rear diopter 3R.

In figure 4B is shown an example of a finished ophthalmic article 1 where the rear diopter 3R has been finished, in particular by surfacing in order to obtain the prescribed optical power.

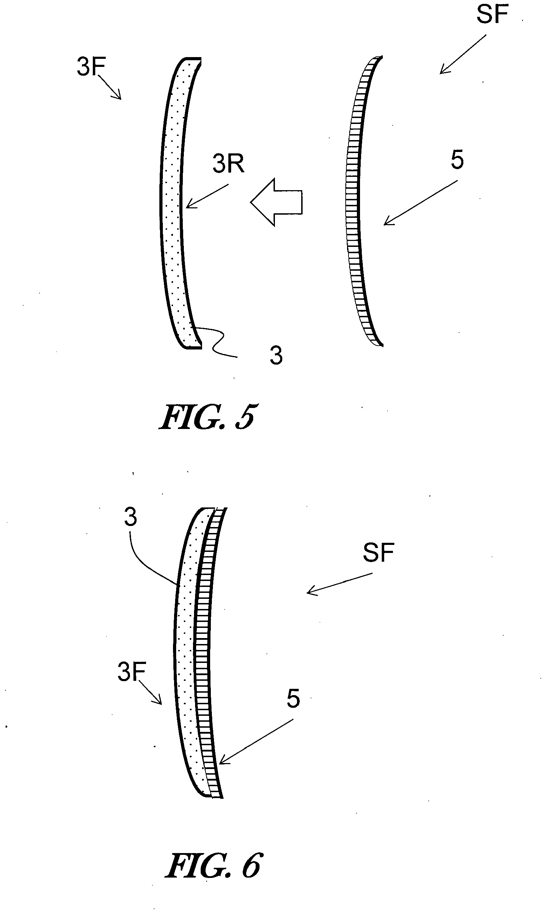

Figure 5 and 6 are similar views to the views of figures 1 and 4 with the difference that the optical component layer 5 is disposed on the rear diopter 3R and not on the front diopter 3F. In this case, front diopter 3F is unfinished.

From the above, one understands that such a combination of blank 3 with an optical wave shaping elements layer 5 gives wide freedom to realize a semi-finished optical elements SF. In particular base curves of the blank 3 may be chosen independently of the prescription.

For an explicit example, in general for curved frames, it's more suitable to put lenses with a front base curve of 6.00D.

If on the front diopter 3F, an optical elements layer 5 is disposed having a diopter of 2.50D, then the semi-finished optical element SF (figure 4A) will correspond to an effective curvature of 8.50D as effective front optical power.

So, the optical elements layer 5 provides an optical extra power and therefore a modular approach is possible.

In this case for example, having -0,50D rear diopter 3R instead of +2D (using standard semi-finished optical element SF with same curvature ie 6D, without layer) will lead to a thinner lens at the end.

In particular for negative power lens, for which it is desired to have high base curve for use for sunglasses for example, one might consider a prescribed power of - 5D. Using a standard semi-finished lens having 8D base curve, will lead to a rear surface having -13D. This leads to very thick lens edges which are practically not acceptable for a wearer. Using a semi-finished lens SF as described above having same curvature ie 8D with a component layer 5 providing extra power -5D, will lead to rear surface having 8D. Since rear surface power and front base curve are similar i.e. 8D, lens thickness is highly reduced.

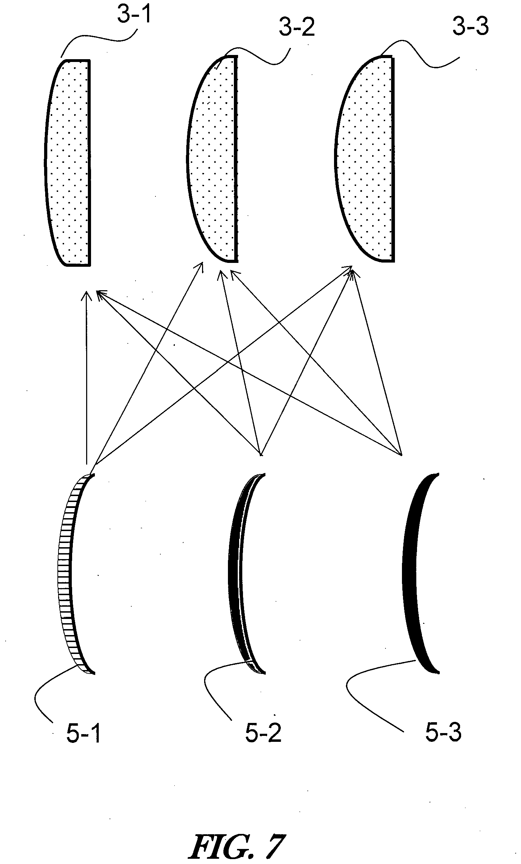

In order to illustrate the possible modular approach, figure 7 shows a more detailed example with a set of three blanks 3-1, 3-2 and 3-3 and a set of three optical elements layers 5-1, 5-2 and 5-3.

The optical power of front diopters 3F of blanks 3-1, 3-2 and 3-3 are respectively for example 0.00D, +3.00 D and +6.00 D and the optical power of the unfinished rear diopters 3R are 0.00D.

The optical power of the optical elements layers 5-1, 5-2 and 5-3 are respectively for example +2.00 D, +3.50 D and +4.50 D.

Thus the semi-finished optical elements SF may have optical powers

| Blank 3 | Optical element layer 5 | Optical power of SF element |
|---|---|---|
| 3-1 | 5-1 | +2.00 D |
| 3-2 | 5-2 | +6.50 D |
| 3-3 | 5-3 | +10.50 D |
| 3-1 | 5-2 | +3.50 D |
| 3-2 | 5-3 | +7.50 D |
| 3-3 | 5-1 | +8.00 D |
| 3-1 | 5-3 | +4.50 D |
| 3-2 | 5-1 | +5.00 D |
| 3-3 | 5-2 | +9.50 D |

With these combinations, semi-finished optical elements SF with an optical power of +2.00 D, +3.50 D, +4.50D, +5.00 D, +6.50 D, +7.50 D, +8.00D, +9.50 D and +10.50D can be obtained. Taking into account that the rear diopter 3R may be surfaced up to - 1.50D and less than + 0.50D for example, a complete range of ophthalmic article from +0.50 D to +10.50D can be obtained.

In relationship with the simplified example of figure 7, such a set may comprise nine different semi-finished optical elements SF.

For sure other values may be chosen to set up the set of semi-finished optical elements SF.

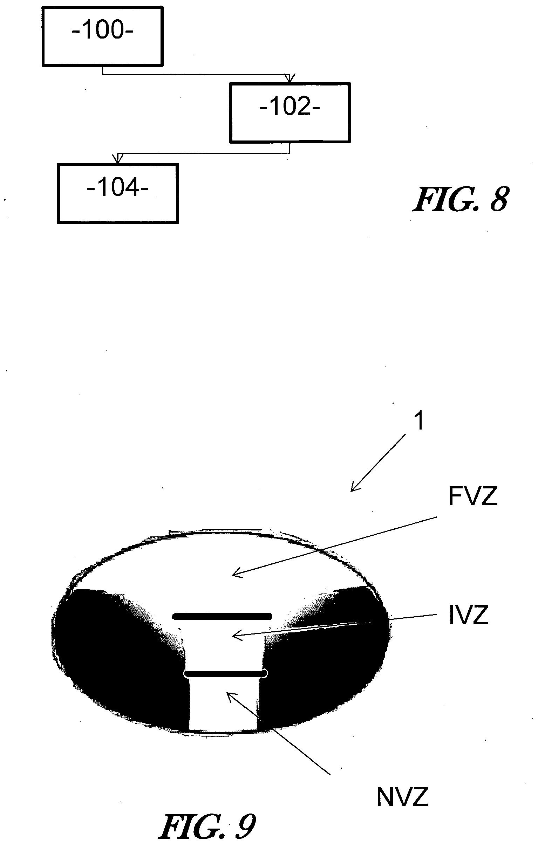

Figure 8 shows a flowchart of a method for manufacturing an ophthalmic article with a prescribed vision correction.
In a step 100 a prescription with a prescribed vision correction is provided. The prescription comprises for example the targeted optical power of the final ophthalmic article 1 for each eye of the wearer, as well as information about cylinder, axis and sphere. Further information may comprise pupillary distance, shape of the face, eye rotation center position, and fitting parameters to the frame choses by the wearer. In particular a base frame curvature of an eyewear may be provided.
In a step 102, a semi-finished optical element SF as described above is provided.

Different criteria may be taken into account concerning the semi-finished optical element SF like for example:
i) the optical power distribution of the semi-finished optical element is close or closest to the prescribed optical vision correction,
ii) the base curve of the semi-finished optical element SF is adapted to the frame chosen by the wearer,
iii) the thickness, in particular at the edges of ophthalmic article 1 is reduced as much as possible.

In case a base frame curvature of the eyewear chosen by the user was given, step 102 comprises for example providing semi-finished optical elements SF such that the front diopter 3F of the blank 3 of each semi- finished element SF of the set has a curvature fitting to the base frame curvature.

Assuming that the base frame curvature is +6,00 D, and that the prescribed optical power is +7,00 D, one may chose the semi-finished optical element combining blank 3-3 and optical elements layer 5-1 having an optical power of +8.00 D.

In another case, thickness of the ophthalmic article, in particular at the lens edges may be a priority and step 102 comprises providing a semi-finished optical element SF such that the power distribution of the optical component layer 5 is optimized with regard to the first optical power distribution of the blank 3 to reduce thickness, in particular at the edges, of the ophthalmic article 1.

In such a case the optical power of the blank 3 may be lower than the optical power provided by the optical component layer 5 and therefore the contribution of the second optical power distribution of the optical component layer 5 is maximized.

In this case step 102 may comprise a preliminary sub-step comprising the fact to determine or to calculate the thickness, for example at the edges or in the center, of the ophthalmic article 1.

With regard to figure 7 and assuming that the prescribed optical power is +7,00 D, one may chose the semi-finished optical element combining blank 3-2 and optical elements layer 5-3 having an optical power of +7.50 D.

Finally in step 104, the unfinished rear diopter 3R of the blank 3 of the selected semi-finished optical element is surfaced (-0.50D in case of selection of the 3-2/5-3 semi-finished optical element and -1.00D in case of the 3-3/5-1 semi-finished optical element where the selection was prioritized with respect to the base curve of the eyewear) to get the ophthalmic article with the prescribed vision correction. Depending on which diopter the optical elements layer 5 is disposed, it may also be the front diopter 3F which may be surfaced.

As shown in figure 9, the ophthalmic article 1 comprises for example a near vision zone NVZ, an intermediate vision zone IVZ and a far vision zone FVZ for example for progressive lenses. The relevant prescription for vision correction comprises then a far vision correction to be associated with the far vision zone FVZ and an addition value to be associated to the near vision zone NVZ and to the intermediate vision zone IVZ.

For such progressive lenses, the optical element layer 5 has an optical power distribution corresponding to the addition value at least for a part of the prescribed vision correction in two zones, in particular for the intermediate vision zone IVZ and near vision zone NVZ. With regard to figure 8, this means that the optical elements layer 5 has a first zone of the shape of vision zone IVZ and a second zone with the shape of the near vision zone NVZ. Whereas in the zones other than those corresponding to IVZ and NVZ the optical power distribution is zero, in the zones corresponding to IVZ and NVZ, the optical power distribution respectively corresponds to the addition value for these zones. In other words, for the semi-finished optical elements SF, far vision correction is mainly provided by the blank 3 and the optical elements layer 5 provides for IVZ and NVZ the necessary complementary optical power for intermediate vision correction and near vision correction.

With respect to standard progressive lenses which exhibit a more important curvature at the bottom, the semi-finished optical element SF would show a curvature which can be near to non-progressive lenses.

So the set of semi-finished optical elements can be defined with all needed addition values (in general from 0.75D to 3.50D by 0.25D step) in the optical component layer 5. In case the optical component layer is a metasurface 5MS, one metasurface by addition value for each needed base curve value) or with only part of the addition to ' limit the number of metasurfaces (e.g. only addition 0.75D, 1.75D and 2.75D in the metasurface).

From the above, it is clear that by judicious combination of optical elements layers 5 and substrates 3, of the design of semi-finished optical elements SF may be optimized to various criteria.

## Claims

1. Semi-finished optical element (SF) for manufacturing an ophthalmic article (1) for vision-correction comprising:
- at least one blank (3) having a front diopter (3F) and a rear diopter (3R), the blank (3) being configured to present a first optical power distribution,
- one of the diopters (3F, 3R) being unfinished and the other being finished,
- a optical component layer (5) comprising a periodic or pseudo - periodic arrangement of optical wave-front shaping elements (5E) that are smaller than 10µm and configured to control incoming light at least in a part of the visible spectrum and providing a second optical power distribution,
wherein the optical component layer (5) is transparent in transmission in the visible wavelength and is disposed on the finished diopter (3F, 3R) of the blank (3) for cooperating together to achieve a third optical power distribution.

2. Semi-finished optical element (SF) according to claim 1 for manufacturing an ophthalmic article (1), where the second optical power distribution provided by the optical component layer (5) mainly contributes to achieve the third optical power distribution.

3. Semi-finished optical element (SF) according to any of preceding claims, wherein the optical component layer (5) is adhered to the front diopter (3F) and/or the rear diopter (3R).

4. Semi-finished optical element (SF) according to any one of claims 1 to 3, wherein the arrangement of periodic or pseudo-periodic optical wave-front shaping elements (5E) comprises a pattern and a periodicity according to at least one dimension, the periodicity having a dimension less than at least one wavelength in the visible range.

5. Semi-finished optical element (SF) according to any of preceding claims, the optical wave-front shaping elements (5E) comprise optical scatterers.

6. Semi-finished optical element (SF) according to claim 5, wherein the optical scatterers comprise dielectric nanoresonators with a refractive index higher than 1.8.

7. Semi-finished optical element (SF) according to claim 6, wherein dielectric nanoresonators are made of SiO2, MgF, Ti2O3, TiO2, Ti3O5, or GaN.

8. Semi-finished optical element (SF) according to any of claims 5 to 7, wherein the optical scatterers comprise a rod-, cylinder-, hemispheric-, cubic-shape.

9. Semi-finished optical element (SF) according to any one of claims 1 to 2, wherein the arrangement of periodic optical wave-front shaping elements (5E) comprises a pattern and a periodicity according to at least one dimension, the periodicity having a dimension greater than at least one wavelength in the visible range.

10. Semi-finished optical element (SF) according to any of preceding claims, wherein the optical component layer (5) comprises at least a first zone (FVZ) corresponding to a first vision zone, in particular a far vision zone and a second zone corresponding to a second vision zone (NVZ), in particular a near vision zone.

11. Ophthalmic article (1) having a given prescription comprising a semi-finished optical element (SF) according to any of claims 1-10, where the unfinished diopter (3R, 3F) of the blank (3) is finished, in particular surfaced to achieve the given prescription.

12. A set of blanks (3) and a set of optical components layers (5) for manufacturing ophthalmic articles (1) of given prescriptions, wherein:
- the blanks (3) have a front diopter (3F) and a rear diopter (3R) and at least one diopter, in particular front diopter (3F) is curved, at least two blanks (3) having different base curves, one of the diopters (3F, 3R) being unfinished and the other being finished,
- the optical components layers (5) have an arrangement of periodic or pseudo-periodic optical wave front shaping elements (5E) that are smaller than 10µm and configured to control incoming light at least in a part of the visible spectrum, at least two optical components layers (5) having a different optical power,
wherein the optical component layers (5) are transparent in transmission in the visible wavelength and are configured to be disposed on one associated finished diopter (3F, 3R) of the blank (3) for cooperating together to achieve, after surfacing of the unfinished diopter of the blank (3), ophthalmic articles (1) of given prescriptions.

13. Method for manufacturing an ophthalmic article (1) with a prescribed vision correction, comprising the steps of :
- providing a prescription with a prescribed vision correction,
- providing a semi-finished optical element (SF) comprising
at least one blank (3) having a front diopter (3F) and a rear diopter (3R) configured to present a first optical power distribution, one of the diopters (3F, 3R) being unfinished and the other finished, and
an optical component layer (5) having a periodic or pseudo-periodic arrangement of optical wave-front shaping elements (5E) that are smaller than 10µm and configured to control incoming light at least in a part of the visible spectrum and providing a second optical power distribution,
wherein the optical component layer (5) is transparent in transmission in the visible wavelength and is disposed on the finished diopter (3F, 3R) of the blank (3) for cooperating together to achieve a third optical power distribution, and
- surfacing the unfinished diopter (3F, 3R) of the blank (3) of the selected semi-finished optical element (SF) to get the ophthalmic article (1) with the prescribed vision correction.

14. Method for manufacturing an ophthalmic article with a prescribed vision correction, according to claim 13, wherein the method comprises further a step of providing a base frame curvature of an eyewear,
wherein the step of providing a set of semi-finished optical elements (SF) comprises providing semi-finished optical elements (SF) such that the front diopter (3F) of the blank (3) of each semi- finished element (SF) of the set has a curvature fitting to the base frame curvature, and wherein the unfinished diopter of the blank (3) which is surfaced to get the ophthalmic article (1) with the prescribed vision correction is the rear diopter (3R) of the blank (3).

15. Method for manufacturing an ophthalmic article (1) with a prescribed vision correction, according to claim 13 or 14, wherein the second optical power distribution of the optical component layer (5) is optimized with regard to the first optical power distribution of the blank (3) to reduce thickness of the ophthalmic article (1).

16. Method for manufacturing an ophthalmic article (1) with a prescribed vision correction, according to claim 13,
wherein the prescribed, vision correction comprises a far vision correction to be associated with the far vision zone (FVZ) and an addition value to be associated to the near vision zone (NVZ) and to the intermediate vision zone (IVZ), and
wherein the optical component layer (5) has a second optical power distribution contributing mainly to the prescribed vision correction in the near vision zone (NVZ) and in the intermediate vision zone (IVZ).
